# EUROPEAN PATENT APPLICATION

(11) **EP 1 967 658 A2**
(43) Date of publication of application: **10.09.2008**
(21) Application number: 08152338.3
(22) Date of filing: 05.03.2008
(51) Int. Cl.: E03B 7/04

(54) **A water supply system**

(30) Priority: 05.03.2007 IE 20070143; 10.04.2007 IE 20070249
(71) Applicant: Lilly, Robert, Castlerea, Co. Roscommon (IE); Fitzgerald, James, County Roscommon (IR); Reilly, Conor, County Kildare (IE)
(72) Inventor: LILLY, Robert, County Roscommon (IE); REILLY, Conor, County Kildare (IE)
(74) Representative: McCrann, Sarah Ann

(57) **Abstract**

A water supply system is disclosed comprising a main supply tank; one or more water receiving vessels; and a pipe network comprising a plurality of links, the pipe network providing fluid communication between the main supply tank and the one or more water receiving vessels characterized in that the water supply system further comprises a water level tank connected intermediate the main supply tank and the one or more water receiving vessels and in fluid communication therewith, the water level tank being positioned such that the water level in the water level tank controls the water level in the one or more water receiving vessels. In this way, improved operation of the water supply system may be achieved.

## Description

The present invention relates to a water supply system. In particular, the invention relates to a water supply system comprising a main supply tank; one or more water receiving vessels; and a pipe network comprising a plurality of links, the pipe network providing fluid communication between the main supply tank and the one or more water receiving vessels. Such water supply systems are in used in a wide variety of buildings from houses to industrial units and livestock buildings.

One of the most widely used water supply system comprises a water tank which is supplied with mains water under pressure and which in turn supplies the water outlets within the system with water under pressure, either by a gravity feed or by way of a pump. In general the water outlets of the system which supply receptacles such as toilet cisterns and the like will be equipped with ballcocks or like valves. In this way, the water receptacles will fill with water until a water level determined by the ballcock is reached, at which point the ball cock will shut off the water outlet. The nature of the ballcock requires that the water outlet be located near the level at which the water supply is shut off. In this way, the water receptacle fills by way of water entering the water receptacle from an elevated position.

There are a number of problems associated with this manner of operation of water supply system. Firstly, the system is dependent on the operation of the ballcock. If the ballcock ceases to function correctly, the water receptacle may overflow or alternatively it may not fill at all. This is particularly relevant if the ballcock is not enclosed and may be subjected to knocks and bangs in the course of daily use. Secondly, the filling of the water receptacle can disturb those nearby due to the noise of the water flowing or trickling out of the water outlet at its elevated position and falling onto the surface below, be it the surface on the water of the base of the water receptacle. This disturbance can be more noticeable at night time when the background noise is greatly reduced.

It is an object therefore of the present invention to provide a water supply system that removes the ballcock from water receptacles in the water supply system.

### STATEMENTS OF INVENTION

According to the invention there is provided a water supply system comprising a main supply tank; one or more water receiving vessels; and a pipe network comprising a plurality of links, the pipe network providing fluid communication between the main supply tank and the one or more water receiving vessels characterized in that the water supply system further comprises a water level tank connected intermediate the main supply tank and the one or more water receiving vessels and in fluid communication therewith, the water level tank being positioned such that the water level in the water level tank controls the water level in the one or more water receiving vessels.

In this way, it is possible to control the water level in a water receiving vessel simply by maintaining a suitable water level in the water level tank. The water level in the water level tank is not dependent on the operation of a ballcock located within the water level tank and there is no requirement for a valve of any sort in the water receiving vessel. The water will flow from the water level tank until the water pressure at the outlet of the water level tank is equal to the sum of the water pressures at the inlets to the one or more water receiving vessels. Furthermore, the water pressure in the water receiving vessel is dependent on the depth of the water above it, therefore the water outlets in the water receiving vessel will be located underway. Therefore water entering the water receiving vessel will not be falling from an elevated position and will therefore not make any noise associated with the falling.

In one embodiment of the invention there is provided a water supply system in which the water level tank is in fluid communication with the one or more water receiving vessels by way of a constantly available channel. In this way, the channel is not and is not required to be regulated by a ballcock or any other form of valve. Free, unrestricted fluid flow will therefore occur between the water level tank and the water receiving vessel by way of the channel when the water supply system is in use.

In another embodiment of the invention there is provided a water supply system in which the main supply tank is supplied with mains water. This is a particularly efficient way of supplying the main supply tank.

In a further embodiment of the invention there is provided a water supply system in which the main supply tank is supplied with rainwater. This is a particularly efficient way of supplying water to the main supply tank as it reduces the reliance on mains water and further reduces the waste of mains water on unsuitable uses such as toilet flushing and livestock drinking water. Potable water is not needed for either of these tasks and it is therefore inefficient and unnecessarily costly to use mains water, which is expensive to produce in these tasks. The system of the invention can therefore be used to supply rainwater for uses that do not require potable water.

In an alternative embodiment of the invention there is provided a water supply system in which the mains supply tank is supplied with rainwater from a rainwater collection system. In this way, rainwater may be collected from roofs, gutters and the like and supplied directly to main supply tank, thereby reducing the reliance on mains water and wastage of mains water in unsuitable uses.

In one embodiment of the invention there is provided a water supply system in which the main supply tank is supplied with rainwater from a rainwater storage tank. In this way, previously collected rainwater that has been stored in a rainwater storage tank can be used in the water supply system. Storing rainwater for later use further reduces the reliance on mains water. The rainwater storage tank may be located in an elevated position with respect to the main supply tank so as to supply water thereto by way of gravity. Alternatively, the rainwater storage tank may be located elsewhere, for example underground, wherein the rainwater would be pumped to the main supply tank.

In another embodiment of the invention there is provided a water supply system comprising a plurality of water level tanks, each in fluid communication with one or more water receiving vessels wherein the water receiving vessels in fluid communication with one water level tank are isolated from the water receiving vessels in fluid communication with any other water level tank. In this way the water supply system may be used to supply a large building comprising many water receiving vessels dispersed across a wide area or over a number of storeys.

In a further embodiment of the invention there is provided a water supply system in which the water level tank comprises an inlet port, which is fitted with a shot-off valve operable in response to the water level in the water level tank. In this way, the water level in the water level tank may be appropriately controlled, so as to ensure it has the correct water level to ensure adequate water supply to the water receiving vessels.

In an alternative embodiment of the invention there is provided a water supply system in which the water level at which the shut-off valve is operable is variable. In this way, the operating water level in the water level tank can be varied as the water supply system changes. For example, if the number of water receiving vessels connected to the water level tank changes, the volume of water required in the water level tank to supply the water receiving vessels will also change. This volume can be controlled by the level of water in the water level tank. The level of water in the water level tank can in turn be controlled by level at which the shut-off valves. Therefore by changing this level the water supply system can be adapted to changes therein.

In one embodiment of the invention there is provided a water supply system in which the water level tank is fitted with an outlet port which is in fluid communication with the channel, the depth of the outlet port in the water level tank is variable. The water pressure at the outlet port of the water level tank is dependent on the depth of the outlet port in the water level tank, that is to say the height of water above the outlet port. Therefore, by changing the depth of the outlet port, the water pressure is changed thereby affecting the water pressure in the water receiving vessels and consequently the water levels therein. The variable depth water level tank outlet port is therefore a further way in which the water supply system can be adapted to changes that have occurred within it.

In another embodiment of the invention there is provided a water supply system in which the one or more water receiving vessels comprise a toilet cistern. A toilet cistern is a very common form of water receiving vessel in a water supply system, which benefits greatly from the advantages of the invention namely the reduction in the chance of ballcock malfunction and the reduction of noise emanating from a toilet after it has been flushed. Futhermore, flushing toilets constitutes a great waste of potable mains water, there for a water supply system supply rainwater would be very useful if integrated with one or more toilet cisterns within a building.

In a further embodiment of the invention there is provided a water supply system in which the one or more water receiving vessels comprise a livestock drinking bucket. This is a particularly efficient way of providing a water supply system within a livestock house. Ballcocks located within livestock drinking buckets are extremely liable to breakage and malfunction as they are regularly knocked against by the livestock in question. If the ballcock ceases to operate correctly, the livestock drinking bucket will either become empty which is detrimental to the welfare of the livestock or will overflow. In a slatted livestock house having waste collection tanks covered by slatted concrete tiles forming a floor for the house, overflowing livestock drinking buckets will overflow into the tanks below. This will cause the tanks to fill up more quickly and require emptying sooner. As emptying the tanks is a time consuming and costly process, it is desirable to minimise the frequency of this process.

In an alternative embodiment of the invention there is provided a water supply system in which the livestock drinking bucket is pivotally mounted. In this way, the contents of the drinking vessel can be emptied quickly, if necessary. This is a particularly desirable feature as the drinking vessels can become easily contaminated with animal waste. By providing a pivotable drinking vessel, the bucket can be "flushed" quickly and easily, in that soiled drinking water can be emptied from the drinking vessel, thereby allowing the drinking vessel to refill with clean drinking water.

In one embodiment of the invention there is provided a water supply system in which the livestock drinking bucket comprises a water inlet pipe in fluid communication with the pipe network and is pivotably mounted thereon. This is seen as a particularly efficient way of providing a pivotable drinking vessel.

In another embodiment of the invention there is provided a water supply system in which the livestock drinking bucket is mounted on a frame comprising hollow members within which is fitted one or more links of the pipe network, which link is in fluid communication with the water inlet pipe. This is a particularly efficient way of accomdating the pipe network within the livestock house. The frame can provide support and protection to the pipe network, thereby reducing the risk of damage thereto by the surrounding livestock.

### DETAILED DESCRIPTION OF THE INVENTION

The invention will now be more clearly understood from the following description of an embodiment thereof given by way of example only with reference to the accompanying drawings in which:-
Fig. 1 is a diagrammatic representation of the system according to the invention;
Fig. 2 is a diagrammatic representation of an alternative embodiment of the system according to the invention;
Fig. 3 is a diagrammatic representation of a water level tank according to the invention;
Fig. 4 is a diagrammatic representation of an alternative embodiment of the system according to the invention;

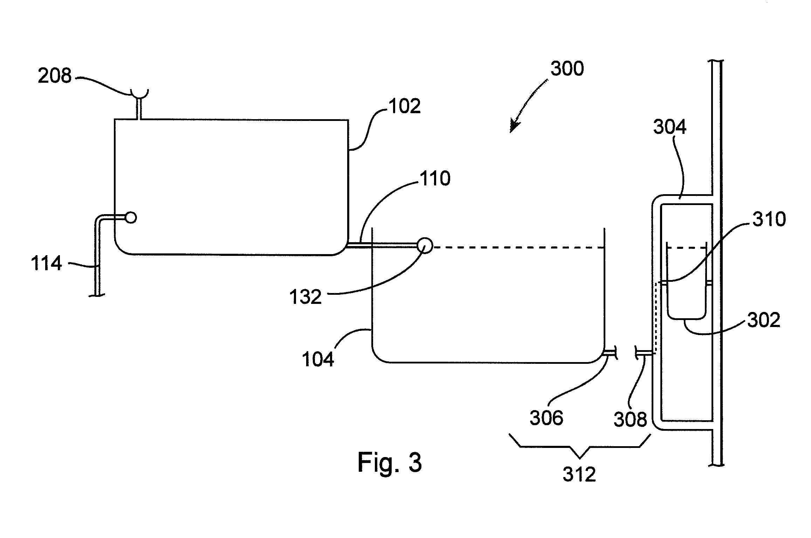

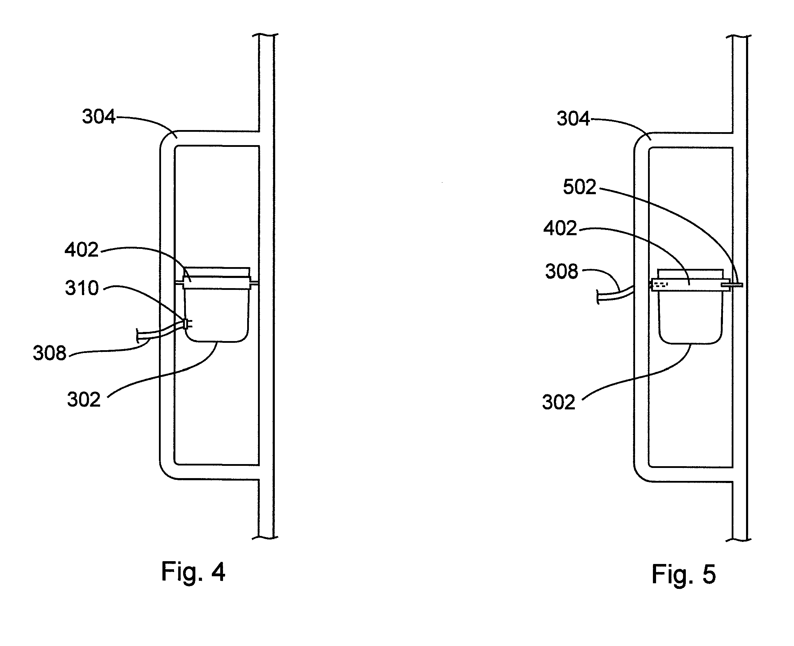

Fig. 3 is a diagrammatic representation of a water receiving vessel for use in the embodiment of Fig. 4; and

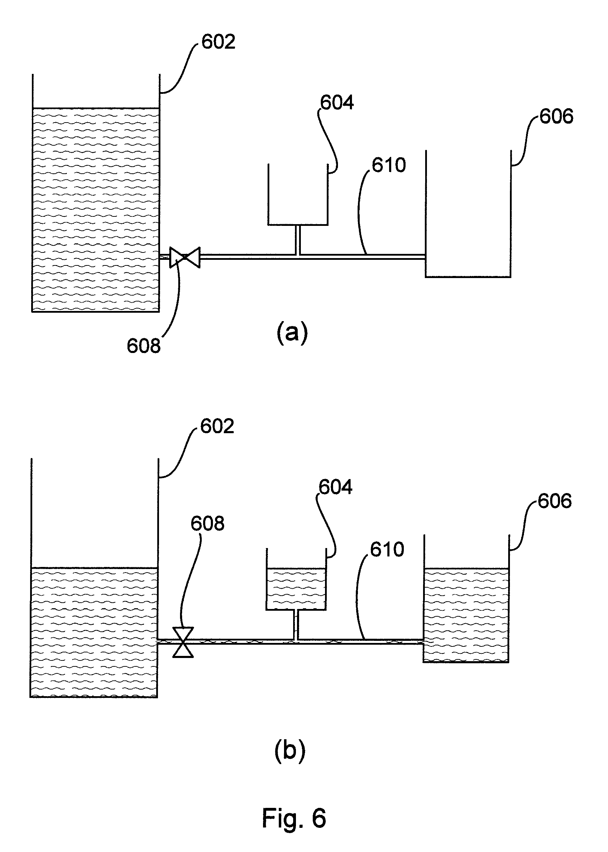

Fig. 6 is a diagrammatic representation of an alternative embodiment of water receiving vessel for use in the embodiment of Fig. 4; and
Fig. 7 is a diagrammatic represention of a simplified version of the system of the invention.

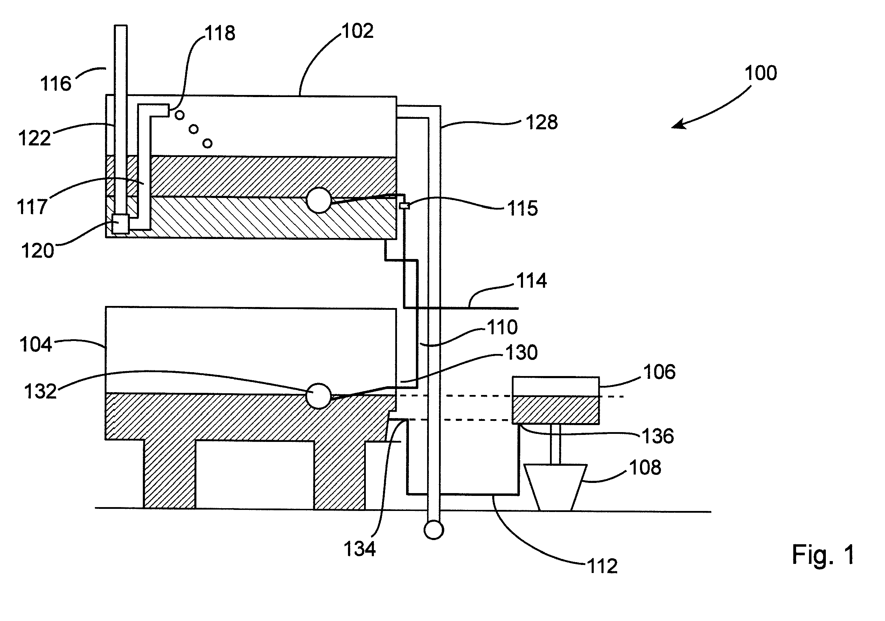

Referring to the drawings, and initially to Fig. 1 thereof, there is shown a water supply system indicated generally by the reference numeral 100, comprising a main supply tank 102, a water level tank 104 and a water receiving vessel, in this case the cistern 106 of a toilet 108. The main supply tank 102 is in fluid communication with the water level tank 104 by way of a pipe 110; and the water level tank 104 is in fluid communication with the cistern 106 by way of a channel 112. Water is supplied to the main supply tank 102 from the mains supply 114 and via rainwater supply pipe 116. The mains supply 114 is fitted with a non-return valve 115 to prevent rainwater in the main supply tank 102 from contaminating the mains supply 114. Rainwater supply pipe 116 comprises a U-shaped pipe, one leg 117 of which is shorter than the other and has a cranked end such that the rainwater supply pipe outlet 118 is located adjacent the top of the main supply tank 102. A filter 120 is located in the rainwater supply pipe 116 at the base of the longer leg 122 for removing debris and other contaminants from the rainwater entering via rainwater supply pipe 116. The main supply tank 102 has a main supply tank outlet 124 located at the bottom right corner of the tank, which is connected to the pipe 110. A supply tank ballcock 126 is mounted in the main supply tank 102 approximately one third of the way up the tank and is connected to the mains supply 114 at that point. The main supply tank 102 is further connected to an overflow pipe 128 which exits the main supply tank 102 adjacent the top of the tank. The main supply tank 102 may comprise a PVC tank or other suitable storage tank and may comprise a mixture of rainwater and mains supply water.

The water level tank 104 comprises an inlet port 130 where pipe 110 enters the water level tank 104, bringing water from the main supply tank 102. The inlet port 130 is fitted with a shot-off valve operable in response to a certain water level, in this case a level tank ballcock 132. The water level tank outlet port 134 engages the channel 112, which also engages a cistern inlet 136 in the base of the cistern 106. The outlet port 134 and the cistern inlet 136 are at the same level. Further, the height of water in the cistern 106 above the cistern inlet 136 is equal to that of the water in the water level tank 104 above the outlet port 134.

In use, water will enter the main supply tank 102 via the mains supply 114 and rainwater supply pipe 116. The mains supply 114 will only fill approximately one third of the main supply tank 102 when the main supply 114 will be cut off by the supply tank ballcock 126. Rainwater can fill the rest of the main supply tank 102 if available. If the tank fills up with rainwater, the excess water can exit the tank via the overflow via overflow pipe 128. Water will flow from the main supply tank 102 to the water level tank 104 via pipe 110 until level tank ballcock closes of the inlet port 130. Water will flow between the water level tank 104 and the cistern 106 via channel 112 until the pressure at the outlet port 134 is equal to that at the cistern inlet 136, which will occur when the height of water in the cistern 106 above the cistern inlet 136 is equal to that of the water in the water level tank 104 above the outlet port 134, given that the cistern inlet 136 and the outlet port 134 are at the same level.

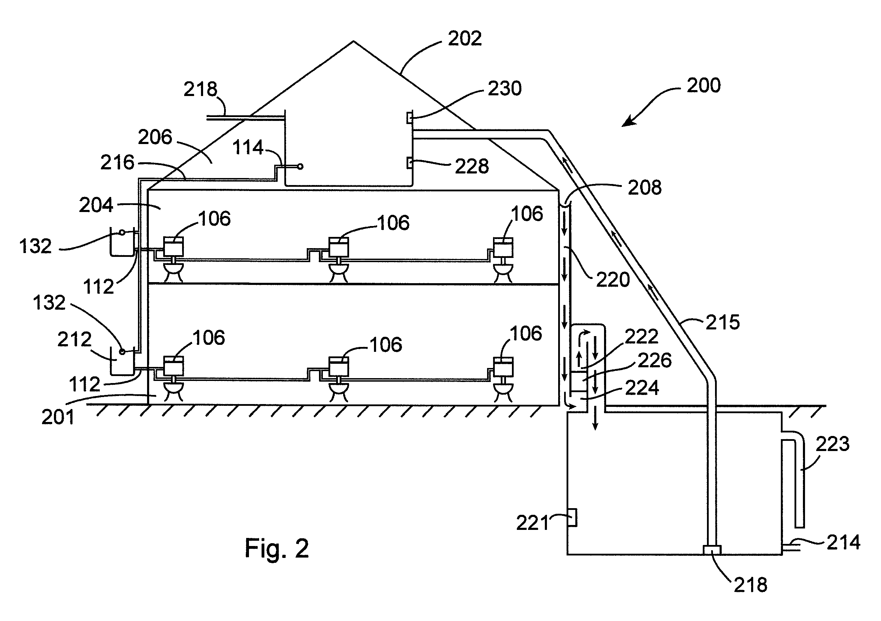

Referring now to Fig. 2, in which like parts have been given the same reference numerals as before, there is shown an alternative embodiment of water supply system indicated generally by the reference numeral 200, installed in building 202 having a ground floor 201, first floor 204, attic 206 and gutters 208 mounted adjacent its eaves. The water supply system 200 comprises a main supply tank 102 located in the attic 206 of the building 202, an upper water level tank 210 mounted adjacent the first floor 204 and a lower water level tank 212 adjacent the ground floor 202. The water supply system 202 further comprises a rainwater storage tank 214 located in the ground below the building 202. The rainwater storage tank 214 is in fluid communication with the main supply tank 102 by way of a rainwater tank pipe 215. The rainwater storage tank 214 is equipped with a pump 218 for pumping stored rainwater from the rainwater storage tank 214 to the main supply tank 102 via the rainwater tank pipe 215. Rainwater enters the rainwater storage tank 214 by way of a rainwater collection pipe 220 which is mounted adjacent the building 202 and receives water from the gutters 208 of the building. The rainwater collection pipe 220 comprises a substantially serpentine section comprising three legs such that the flow of water therein will double back on itself twice in the rainwater collection pipe 220. The middle leg 222 comprises a rough filter 224 and a fine filter 226 for removing debris and other contaminants from the rainwater. The rainwater storage tank 214 further comprises a low water level detector 221 and an overflow pipe 223.

The ground floor 201 and first floor 204 of the building 202 each comprise a plurality of toilets each having a cistern 106. The main supply tank 102 comprises a main supply tank outlet 124 adjacent the base thereof and receives the mains supply at a point approximately one third of the way up the tank. A supply tank ballcock 126 is mounted in the main supply tank 102 is connected to the mains supply 114. A pipe 216 connects the main supply tank outlet 124 with the upper water level tank 210 and lower water level tank 212, where the pipe 216 connects to the inlet port 130 of each water level tank 210, 212. Each of the lower water level tank 212 and upper water level tank 210 is fitted with a level tank ballcock 132 which engages with the inlet port 130 in the tank. Each of the lower water level tank 212 and upper water level tank 210 comprises a water level tank outlet port 134 which engages the channel 112, which also engages the cistern inlets 136 in the base of each of the cisterns 106. The height of water in the in the water level tank 104 above the outlet port 134 is equal to that of the water in cistern 106 above the cistern inlet 136. Further, the height of the water in each cistern 106 above the outlet port 134 is the same.

The main supply tank 102 comprises a low level detector 228 located at a level slightly above that at which the mains supply enters the main supply tank 102 and a high level detector 230 adjacent the top of the main supply tank 102.

In use, water from the gutters 208 of the building travels to the rainwater storage tank 214 by way of the rainwater collection pipe 220, where it will be filtered by the rough filter 224 and the smooth filter 226 on the way. If the amount of water entering the rainwater storage tank 214 exceeds its capacity, water will flow out of the overflow pipe 223. The rainwater is then pumped to the main supply tank 102 by the pump 218. The pump 218 is activated when the water level in the main supply tank 102 drops below the low level detector 228 and is deactivated when the water level in the main supply tank 102 reaches the level of the high level detector 230. The pump is also deactivated if the water level in the rainwater storage tank 214 reaches the level of the low water level detector 221 in the rainwater storage tank 214. If this should occur, the water level in the main supply tank 102 will drop below the low level detector 228 and will the supply tank ballcock 126 will open allowing the main supply tank 102 to fill with mains water to the level that the supply tank ballcock 126 closes again. In this way, mains water is only used in the water supply system 200 if there is no rainwater available.

Water then flows from the main supply tank 102 to the upper water level tank 210 and the lower water level tank 212 via the pipe 216, until the level tank ballcock 132 connected to the inlet port 130 of each water level tank 210, 212 closes of the inlet ports 130. Each of the water level tanks 210, 212 is in fluid communication with the cisterns 106 of the toilets 108 on their floor by way of the channel 112. Water will flow between the upper water level tank 210 and the three cisterns 106 on the first floor 204 of the building 202 until the height of water above the water level tank outlet port 134 of the upper water level tank 210 is equal to the sums of the heights of the water above the cistern inlet 136 in each cistern 106, at which point a water pressure equilibrium will exist in the system comprising the upper water level tank 210, the three cisterns 106 of the first floor and the channel connecting them. Water will flow between the lower water level tank 212 and the three cisterns 106 on the ground floor 201 of the building 202 until the height of water above the water level tank outlet port 134 of the lower water level tank 212 is equal to the sums of the heights of the water above the cistern inlet 136 in each cistern 106, at which point a water pressure equilibrium will exist in the system comprising the lower water level tank 212, the three cisterns 106 of the ground floor and the channel connecting them. When one of the toilets is flushed the water level in the relevant cistern will drop and more water will flow into the cistern 106 from the relevant water level tank via the channel 112. This will in turn cause the water level in the water level tank to drop, opening the level tank ballcock 132 and so allowing more water to flow into the water level tank from the main supply tank 102, thereby maintaining the water level in the water level tank and consequently the cisterns 106.

Referring now to Fig. 3, in which like parts have been given the same reference numerals as before, there is shown a further embodiment of water supply system indicated generally by the reference numeral 300, suitable for installation in a livestock building (not shown). The water supply system 300 comprises a water level tank 104, a livestock drinking vessel 302 mounted in a frame 304 and a main supply tank 102 in an elevated position with respect to the water level tank 104. The main supply tank 102 is fed by the mains supply 114 and is connected to the water level tank 104 by way of a pipe 110. The water level tank 104 comprises an inlet port 130 where pipe 110 enters the water level tank 104 and has a level tank ballcock 132 connected thereto. The water level tank 104 further comprises a water level tank outlet port 134 adjacent its base, connected to an outlet pipe 306. The outlet pipe 306 is in turn connected to a pipe network (not shown) comprising an inlet pipe 308 for the drinking vessel 302, wherein the outlet pipe 306, pipe network and inlet pipe 308 together form the channel 312 between the water level tank 104 and the water receiving vessel, in this case the livestock drinking vessel 302.

In use, water from the mains supply enters the main supply tank 102 from the mains supply 114. Water from the main supply tank 102 is supplied to the water level tank 104 via the pipe 110. The level tank ballcock 132 fitted to pipe 110 ensures that the water level tank 104 will have sufficient water contained therein to ensure a supply of water to the livestock drinking vessel 302 and furthermore that the water level tank 104 does not overflow. Effectively, the water level in the water level tank 104 will always be reasonably close to the maximum level as defined by the ballcock 15, because any drop in the water level will open the level tank ballcock 132 and allow the tank to be topped up. The maximum level of water in the water level tank 104 is chosen such that water will flow from the water level tank 104 to the livestock drinking vessels 302 throughout the livestock building (not shown) as necessary. Water exits the water level tank 104 through the channel 312 which in turn comprises the vessel inlet pipe 310 for each livestock drinking vessel 302.

Starting from a point of equilibrium where the water level in the main supply tank 102 is at the maximum level and the level tank ballcock 132 is closed, the water level in each livestock drinking vessel 302 will be effectively determined by the depth of water in the water level tank 104. The pressure at the water level tank outlet port 134 of the water level tank 104 will be equal to the sum of the pressures at the inlet pipes of each drinking vessel. The pressure at any point in a water vessel is dependent on the height of the water above it. Therefore the sum of the heights of the water above the inlet pipe in each drinking vessel will be equal to the height of water above the water outlet of the water level tank 104. When the water level in one or more of the drinking vessels is lowered, either by drinking, spillage or some other manner, the pressure will be reduced and water will flow from the water tank until the pressures are in equilibrium again. This will lower the water level in the water level tank 104, which will open the level tank ballcock 132 and water from the main supply tank 102 will enter the water level tank 104. Thus water is generally only drawn from the main supply tank 102 to replace water lost from the drinking vessels 5.

Referring now to Fig. 4, in which like parts have been given the same reference numerals as before, there is shown a livestock drinking vessel 302, in this case a bucket or similar device, mounted on a bracket 402 which is in turn mounted on a frame 304. Towards the base of the livestock drinking vessel 302, there is an inlet 404 to which the inlet pipe 308 is connected, thereby allowing water to flow from the inlet pipe 308 through the inlet 310 into the livestock drinking vessel 302.

Referring now to Fig. 5, in which like parts have been given the same reference numerals as before, there is shown a tip-to-flush livestock drinking vessel 302 which is mounted in a bracket 402, wherein the bracket 402 is pivotally mounted on a pin 502 which is in turn mounted on the frame 304, so that the bracket 402 may pivot about a horizontal axis in line with the bracket 402. Furthermore, the inlet 310 in the livestock drinking vessel 302 is located underneath the pivotally mounted bracket 402, co-located with an aperture (not shown) in the bracket 402, providing a path for the inlet pipe into the drinking vessel 5. In this way, the pivoting of the livestock drinking vessel 302 will not affect the inlet pipe 308. The inlet pipe 308 will be in line with the pivot point of the bracket. This arrangement of livestock drinking vessel 302allows the contents of the drinking vessel to be emptied or flushed simply by tipping the drinking vessel on its pivot point.

Referring now to Fig. 6(a) and (b) there is shown a simplified version of the invention comprising a water tank 602 connected to a first water vessel 604 and a second water vessel 606 by way of a pipe 610 having a valve located intermediate the water tank 602 and the water vessels 604, 606. In Fig. 6(a) water tank 602 is full of water and the valve 608 is shut. In Fig. 6(b) the valve has been opened to allow water to flow from the water tank 602 to the water vessels 604, 606 and the water has come to equilibrium in the three receptacles, wherein the height of the water in each receptacle above the connection point to the pipe is the same.

It will be understood by the person skilled in the art the only significant differences between the embodiments relate to the nature and quantity of the water receiving vessels and that the other features such as rain storage tank and the like may be used in any of the embodiments, and that all embodiments essentially operate in the same way.

It will be understood that the dimensions of the water level tanks 102 can be altered to suit different system requirements.

It will be further understood that stop valves may be placed in the various pipes of the system to facilitate installation, maintenance and adjustment of the system.

In the specification the terms 'comprise', 'comprises', 'comprised' and 'comprising' or any variation thereof and the terms 'include', 'includes', 'included' or 'including' or any variation thereof are considered to be totally interchangeable and they should all be afforded the widest possible interpretation.

The invention is not limited to the embodiment herein described, but may be varied in both construction and detail within the terms of the claims.

## Claims

1. A water supply system comprising a main supply tank; one or more water receiving vessels; and a pipe network comprising a plurality of links, the pipe network providing fluid communication between the main supply tank and the one or more water receiving vessels **characterized in that** the water supply system further comprises a water level tank connected intermediate the main supply tank and the one or more water receiving vessels and in fluid communication therewith, the water level tank being positioned such that the water level in the water level tank controls the water level in the one or more water receiving vessels.

2. A water supply system as claimed in claim 1 in which the water level tank is in fluid communication with the one or more water receiving vessels by way of a constantly available channel.

3. A water supply system as claimed in claim 1 or 2 in which the main supply tank is supplied with mains water.

4. A water supply system as claimed in any preceding claim in which the main supply tank is supplied with rainwater.

5. A water supply system as claimed claim 4 in which the mains supply tank is supplied with rainwater from a rainwater collection system.

6. A water supply system as claimed in claim 4 or 5 in which the main supply tank is supplied with rainwater from a rainwater storage tank.

7. A water supply system as claimed in any preceding claim comprising a plurality of water level tanks, each in fluid communication with one or more water receiving vessels wherein the water receiving vessels in fluid communication with one water level tank are isolated from the water receiving vessels in fluid communication with any other water level tank.

8. A water supply system as claimed in any preceding claim in which the water level tank comprises an inlet port, which is fitted with a shot-off valve operable in response to the water level in the water level tank.

9. A water supply system as claimed claim 8 in which the water level at which the shut-off valve is operable is variable.

10. A water supply system as claimed in any preceding claim in which the water level tank is fitted with an outlet port which is in fluid communication with the channel, the depth of the outlet port in the water level tank is variable.

11. A water supply system as claimed in any preceding claim in which the one or more water receiving vessels comprise a toilet cistern.

12. A water supply system as claimed in any preceding claim in which the one or more water receiving vessels comprise a livestock drinking bucket.

13. A water supply system as claimed in claim 12 in which the livestock drinking bucket is pivotally mounted.

14. A water supply system as claimed in claim 12 or 13 in which the livestock drinking bucket comprises a water inlet pipe in fluid communication with the pipe network and is pivotably mounted thereon.

15. A water supply system as claimed in claim 12 to 14 inclusive in which the livestock drinking bucket is mounted on a frame comprising hollow members within which is fitted one or more links of the pipe network, which link is in fluid communication with the water inlet pipe.
